# EUROPÄISCHE PATENTSCHRIFT

(11) **EP 2 673 496 B1**
(45) Veröffentlichungstag und Bekanntmachung des Hinweises auf die Patenterteilung: **30.12.2020**
(21) Anmeldenummer: 12718560.1
(22) Anmeldetag: 26.01.2012
(51) Int. Cl.: F02N 5/02, F02N 19/00, B60K 6/48, F02N 11/00, F02N 15/02, F02N 15/08

(54) **VERFAHREN UND VORRICHTUNG ZUM STARTEN EINER BRENNKRAFTMASCHINE**
METHOD AND DEVICE FOR THE START OF AN INTERNAL COMBUSTION ENGINE
PROCÉDÉ ET DISPOSITIF POUR LE DÉMARRAGE D'UN MOTEUR À COMBUSTION INTERNE

(30) Priorität: 09.02.2011 DE 102011010779; 15.03.2011 DE 102011013996
(43) Veröffentlichungstag der Anmeldung: 18.12.2013
(73) Patentinhaber: Schaeffler Technologies AG & Co. KG, 91074 Herzogenaurach (DE)
(72) Erfinder: REIK, Wolfgang, 77815 Bühl (DE); WINKLER, Thomas, 77654 Offenburg (DE); GÖCKLER, Mathias, 77833 Ottersweier (DE)
(86) Internationale Anmeldenummer: PCT/DE2012/000058
(87) Internationale Veröffentlichungsnummer: WO 2012/107016

(56) Entgegenhaltungen:
- EP-A1- 1 106 823
- EP-A1- 2 258 968
- EP-A2- 1 524 430
- DE-A1-102007 033 677
- DE-A1-102007 034 538
- DE-A1-102010 017 932
- GB-A- 676 850
- US-A- 5 713 320
- US-A1- 2006 102 138

## Beschreibung

Die Erfindung betrifft ein Verfahren mit den Merkmalen gemäß dem Oberbegriff des Anspruchs 1 und eine Vorrichtung mit den Merkmalen gemäß dem Oberbegriff des Anspruchs 7.

Die EP 1 106 823 A1 beschreibt ein Verfahren zum Starten einer Brennkraftmaschine, in dem eine Elektromaschine die Federelemente eines Schwingungsdämpfers erst rückwärts komprimiert und dann die Brennkraftmaschine in Startrichtung beschleunigt. Die EP 1 524 430 A2 beschreibt einen Schwingungsdämpfer mit Freiwinkel seiner Federeinrichtung. Die DE 10 2010 017 932 A1 beschreibt einen Freilauf-Drehmomentübertragungsmechanismus eines Hybridantriebsstrangs, der das Starten einer Maschine unterstützt.

Brennkraftmaschinen insbesondere in Antriebssträngen von Kraftfahrzeugen sind beispielsweise als Verbrennungsmotoren mit Hub- oder Kreiskolben ausgebildet. Infolge der Verlagerung der Kolben in ihren Zylindern stellt sich dabei über den Drehwinkel der Kurbelwelle ein Summenmoment ein, das sich aufgrund von Komprimierungs- und Expansionsmomenten der im Hubraum verdichteten und expandierenden Gase abhängig von der Zylinderzahl wellenförmig entwickelt und von einem aus Reibmomenten gebildeten Schleppmoment überlagert wird. Bei einer Stilllegung der Brennkraftmaschine wird die Kurbelwelle durch einen letzten Expansionsvorgang eines Zylinders zwischen zwei Summenmomentmaxima positioniert. Um einen Start der Brennkraftmaschine erfolgreich durchführen zu können, muss das in Drehrichtung der Kurbelwelle folgende Summenmomentmaximum überwunden werden, so dass nach Kraftstoffeinspritzung die interne Verbrennung des komprimierten Gemisches gezündet und der Start der Brennkraftmaschine einsetzen kann. Um die Kurbelwelle in Bewegung zu setzen, werden Anlassermotoren eingesetzt, die in einen mit der Kurbelwelle in Verbindung stehenden Anlasserzahnkranz eingespurt werden. Hierbei sind hohe Untersetzungen der Drehzahlen des Anlassermotors wirksam, die das nötige Drehmoment zur Überwindung des Summenmomentmaximums auch bei hohen Schleppmomenten, wie sie beispielsweise bei geringen Außentemperaturen auftreten, aufbringen.

In Antriebssträngen, bei denen die Funktion des Anlassermotors in einen Stromgenerator integriert ist, ist eine derart hohe Untersetzung im Generatorbetrieb wenig zweckmäßig, so dass ein Start der Brennkraftmaschine bei geringer Untersetzung erfolgen muss. Hierbei soll eine für den Anlasser- und Generatorbetrieb vorgesehene Elektromaschine aus Kosten- und Gewichtsgründen klein dimensioniert sein. Dies kann zu Startschwierigkeiten insbesondere bei hohen Schleppmomenten führen, wie sie beispielsweise bei geringen Temperaturen unter 0°C auftreten können.

Aufgabe der Erfindung ist daher, ein Verfahren und eine Vorrichtung vorzuschlagen, mit denen ein zuverlässiger Start der Brennkraftmaschine in Antriebssträngen mit einer für Start- und Generatorbetrieb eingesetzten Elektromaschine durchgeführt werden kann.

Diese Aufgabe wird durch ein Verfahren mit den Merkmalen gemäß Anspruch 1 sowie durch eine Vorrichtung mit den Merkmalen gemäß Anspruch 7 gelöst.

Weitere bevorzugte Ausführungsformen und vorteilhafte Ausgestaltungen der Erfindung ergeben sich aus den Unteransprüchen.

Die Aufgabe wird also durch ein Verfahren zum Start einer Brennkraftmaschine nach dem beiliegenden Anspruch 1 gelöst.

Durch die Vorspannung der Kurbelwelle gegen die Drehelastizität und gegen die Kompression des im Drehwinkel zurückliegenden Zylinders der Brennkraftmaschine wird potenzielle Energie aufgebaut, die die Elektromaschine beim eigentlichen Startvorgang in Drehrichtung der Kurbelwelle im Normalbetrieb unterstützt. Hierbei werden die gespeicherte Druckarbeit des Gases im komprimierten Zylinder und die Federenergie in ein Drehmoment gewandelt, das in Drehrichtung das Drehmoment der Elektromaschine unterstützt, so dass das Summenmomentmaximum des zu komprimierenden Zylinders überwunden wird, obwohl das effektive, auf die Kurbelwelle wirkende Drehmoment der Elektromaschine kleiner als das Summenmomentmaximum ist. Durch die Abdeckung der Schleppmomentspitzen mittels des vorgeschlagenen Verfahrens kann die Elektromaschine für die Normalanforderungen im üblichen Start- und Generatorbetrieb ausgelegt und damit klein und leicht ausgebildet werden.

Gemäß dem vorgeschlagenen Verfahren kann die Vorspannung der Drehelastizität und der Grad der Kompression des vorhergehenden Zylinders und daher die Kurbelwelle und die Drehelastizität mit einem vorgegebenen Drehmoment der Elektromaschine belastet werden. Durch die Abstimmung der Steifigkeit der Drehelastizität abhängig von den Kompressionskräften des vorhergehenden Zylinders kann vorgesehen werden, eine Blocklage von die Drehelastizität ausbildenden Energiespeichern zu vermeiden. Im Weiteren kann bei drehschlüssiger Anbindung der Elektromaschine an die Kurbelwelle unter Berücksichtigung der dazwischen liegenden Übersetzung und abhängig von der Anzahl der Zylinder der Brennkraftmaschine der Rotor der Elektromaschine um einen vorgegebenen Drehwinkel verdreht werden, der beispielsweise von einem Drehwinkelsensor des Rotors zur Steuerung der Elektromaschine erfasst werden kann. Hierbei kann eine Vorgabe für den Drehwinkel abhängig von einer Information, in welcher Position die Kurbelwelle zwischen zwei Summenmomentmaxima steht, die beispielsweise aus einem in einem Steuergerät erfassten und über den Stillstand der Brennkraftmaschine hinaus gespeicherten Größe eines Drehzahlsensors der Kurbelwelle ermittelt wird, erfolgen. Die vorzugsweise elektronisch kommutierte Elektromaschine kann in besonders vorteilhafter Weise leistungsgeregelt unter Verwendung der zur Verfügung stehenden Größen wie Außentemperatur, Drehwinkel der Kurbelwelle, anliegenden Übersetzung und dergleichen betrieben werden, wobei aktuell vorliegende Summenmomente laufend beispielsweise durch die angeforderte Leistung, den Stromfluss oder dergleichen erkannt und bei der Steuerung der Elektromaschine sowohl im zurückdrehenden Aufzugbetrieb als auch im Beschleunigungsbetrieb der Kurbelwelle berücksichtigt werden.

Zwischen der Elektromaschine und der Kurbelwelle kann ein schaltbares Getriebe wirksam angeordnet sein, wobei es vorteilhaft ist, dieses Getriebe von der Elektromaschine zur Kurbelwelle während des Schaltvorgangs ins Langsame übersetzend zu schalten. Infolge dessen erhöht sich der Drehwinkel an der Elektromaschine und deren aufzuwendendes Drehmoment sinkt beziehungsweise das auf die Kurbelwelle wirkende Drehmoment steigt, so dass Brennkraftmaschinen mit höheren Summenmomentmaxima gestartet werden können. Beispielsweise gelingt ein Startvorgang von Vierzylindermotoren wie Dieselmotoren ohne ein derartiges Getriebe mit Elektromaschinen mit einer Leistung von ca. 8 kW selbst bei sehr niederen Außentemperaturen unter -10°C. Brennkraftmaschinen mit bei geringen Temperaturen noch höheren Lastmomenten wie beispielsweise 6- bis 10-Zylindermotoren können mit einem ins Langsame geschalteten Getriebe mittels desselben Verfahrens ohne Erhöhung der Leistung der Elektromaschine gestartet werden. Der Vollständigkeit halber sei angemerkt, dass die festen Übersetzungen i zwischen Elektromaschine und Kurbelwelle dabei grundsätzlich frei gewählt werden können, und bevorzugt zwischen 2 < i < 3 liegen und die Übersetzung i(g) des schaltbaren Getriebes i(g) > 2,5 sein kann.

Das vorgeschlagene Verfahren wird gemäß dem erfinderischen Gedanken begrenzt auf Situationen, bei denen ein erfolgreicher Startvorgang durch eine ausschließliche Beschleunigung der Kurbelwelle durch die Elektromaschine in Betriebsrichtung der Kurbelwelle beschleunigt wird, um hohe Materialbeanspruchung und verlängerte Startvorgänge in gewöhnlichen Situation zu vermeiden. Hierzu kann vorgesehen sein, Verfahren ausschließlich bei Überschreiten eines Erwartungswerts für ein maximales Summenmoment der Brennkraftmaschine durchzuführen. Ein derartiger Erwartungswert kann als Kennwert oder Kennfeld abhängig von relevanten Parametern in einem Steuergerät hinterlegt sein und an Lang- und Kurzzeitprozesse adaptierbar sein. Beispielsweise kann der Erwartungswert abhängig von der Außentemperatur, einer Temperatur der Brennkraftmaschine, den Kenndaten der Brennkraftmaschine wie Anzahl der Zylinder, Gaswechselkennlinien, temperaturabhängigem Lastmoment, verwendetem Schmiermittel und Laufleistung ermittelt werden. Die Adaption des Erwartungswerts kann alternativ oder zusätzlich laufend mittels aktueller, beispielsweise aus den Betriebsdaten der Elektromaschine wie Leistung, Strom und dergleichen während gewöhnlicher und gemäß dem vorgeschlagenen Verfahren durchgeführter Startvorgänge laufend erfolgen.

Die Aufgabe wird also weiterhin durch eine Vorrichtung gemäß Anspruch 7 zur Durchführung des Verfahrens gelöst. Hierzu ist in der Vorrichtung neben der Brennkraftmaschine mit einer Kurbelwelle, der drehschlüssig mit dieser verbindbaren Elektromaschine ein Steuergerät vorgesehen, in dem die Routinen zur Durchführung des Verfahrens gespeichert und abgearbeitet werden. Im Weiteren weist die Vorrichtung eine mit der Kurbelwelle drehschlüssig verbundene Federeinrichtung einer Schwingungsdämpfungseinrichtung auf, die als Drehelastizität in dem vorgeschlagenen Verfahren genutzt wird. Dabei kann die Schwingungsdämpfungseinrichtung seriell oder parallel zu der Elektromaschine angeordnet sein. Beispielsweise kann die Schwingungsdämpfungseinrichtung seriell in dem Kraftweg zwischen Elektromaschine und Kurbelwelle oder zwischen Kurbelwelle und einem weiteren Bauteil, beispielsweise einer Getriebeeingangswelle wirksam angeordnet sein. Die Kennlinie der Federeinrichtung kann dabei linear oder degressiv beziehungsweise progressiv sein. Im Sinne eines positiven Beschleunigungsverhaltens und damit einer Ausbildung eines hohen Drehimpulses der Elektromaschine hat es sich als vorteilhaft erwiesen, wenn die Federeinrichtung einen Freiwinkel beispielsweise bis zu ± 30° aufweist, so dass nach Abbau der die Beschleunigung der Elektromaschine fördernden Vorspannung der Federeinrichtung ein kraftfreier Bereich der Federeinrichtung wirksam ist und das Summenmomentmaximum im Wesentlichen erreicht ist, bevor die Federeinrichtung in die entgegengesetzte Richtung wieder ein Federmoment aufbaut. Unter einer Federeinrichtung ist im Sinne der Erfindung eine Einrichtung zu verstehen, die abhängig von ihrem Verdrehwinkel zur reversiblen Speicherung und Abgabe von potentieller Energie geeignet ist. Neben der bevorzugten Verwendung von Metallelementen wie Schraubenfedern, Tellerfederpaketen und dergleichen können auch Elastomerelemente und andere nichtmetallische Energiespeicher vorgesehen werden.

In einem vorteilhaften Ausführungsbeispiel ist die als Startergenerator und gegebenenfalls zur Standklimatisierung genutzte Elektromaschine in einem Riementrieb der Brennkraftmaschine aufgenommen, bei dem die Federeinrichtung einer Schwingungsdämpfungseinrichtung wie Riemendämpfungseinrichtung die Drehelastizität bereitstellt. Derartige Riemendämpfungseinrichtungen können Drehschwingungen der Kurbelwelle und/oder Schwingungen des Riemens dämpfen und sind an sich als Riemenscheibendämpfer, Riemenspanner wie Pendelspanner, Decoupler, Viskotilger oder dergleichen bekannt. Erfindungsgemäß wird die Funktion der Federeinrichtung dieser Riemendämpfungseinrichtungen für das vorgeschlagene Verfahren als Drehelastizität genutzt. Zur effektiven Nutzung der Drehelastizität kann ein Verdrehwinkel dieser besonders groß, beispielsweise bis zu ± 90° sein.

In einem weiteren Ausführungsbeispiel der Vorrichtung kann die Elektromaschine hybridisch angeordnet sein, wobei diese bevorzugt parallel zu der Brennkraftmaschine mit einer Getriebeeingangswelle eines Getriebes verbindbar ist. Um Drehschwingungen der Kurbelwelle infolge zyklisch nicht gleichmäßig über den Drehwinkel erfolgender Verbrennungsvorgänge zu dämpfen kann eine entsprechende Schwingungsdämpfungseinrichtung in Form eines Drehschwingungsdämpfers mit einer zwischen Kurbelwelle und Getriebeeingangswelle und damit zwischen Kurbelwelle und Elektromaschine wirksam angeordneten Federeinrichtung wie beispielsweise ein Zweimassenschwungrad vorgesehen sein. Beim Start der Brennkraftmaschine gemäß dem vorgeschlagenen Verfahren zieht die Elektromaschine die Federeinrichtung entgegen der Laufrichtung der Kurbelwelle auf und nutzt die in dieser gespeicherte potentielle Energie neben dem anfallenden Expansionsmoment des zuvor komprimierten Zylinders für den Startvorgang in Laufrichtung. Ist in einem hybridischen Antriebsstrang zwischen der Elektromaschine und der Brennkraftmaschine eine sogenannte Hybridkupplung vorgesehen, so kann durch die Unterstützung der Kompressionskräfte und der Federeinrichtung zumindest während eines Kaltstarts eine Auslegung der Hybridkupplung entsprechend auf kleinere Momente ausgelegt werden, die hohe Startmomente während einer Kaltstartphase nicht abzudecken braucht.

Die Vorrichtung sieht insbesondere bei der Anordnung der Elektromaschine im Riementrieb ein zwischen Elektromaschine und Kurbelwelle angeordnetes schaltbares Getriebe vor, das die Elektromaschine durch Bereitstellung einer (zusätzlichen) Untersetzung der Elektromaschine ins Langsame während des vorgeschalteten Aufziehvorgangs und des Startvorgangs unterstützt.

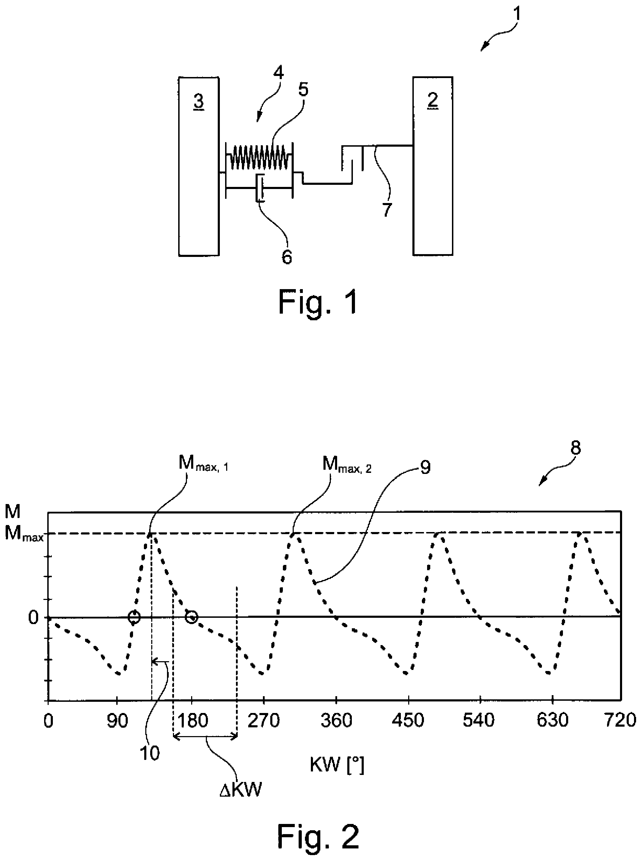

Die Erfindung wird anhand der Figuren 1 und 2 näher erläutert. Diese zeigen:
- Figur 1: eine schematische Darstellung einer Vorrichtung zum Starten einer Brennkraftmaschine
und
- Figur 2: einen Momentenverlauf einer Brennkraftmaschine über einen Kurbelwellenwinkel zur Erläuterung des Startverfahrens.

Figur 1 zeigt ein Prinzipschaltbild der Vorrichtung 1 mit der Brennkraftmaschine 2 und der Elektromaschine 3, die miteinander drehschlüssig unter Zwischenschaltung der Schwingungsdämpfungseinrichtung 4 verbunden sind. Die Schwingungsdämpfungseinrichtung 4 enthält die Federeinrichtung 5 und die Reibeinrichtung 6. Die Elektromaschine 3 kann in beide Richtungen betrieben werden und ist hierzu beispielsweise elektronisch kommutiert. Die Brennkraftmaschine 2 ist bevorzugt ein Verbrennungsmotor mit mehreren, beispielsweise 4 bis 12 Zylindern. Die Elektromaschine kann in der Riemenscheibenebene oder parallel zu der Brennkraftmaschine 2 in einem hybridischen Antriebsstrang angeordnet sein und direkt oder mittels einer entsprechenden lösbaren Verbindung wie Trennkupplung mit der Kurbelwelle verbunden sein. Dementsprechend ist die Schwingungsdämpfungseinrichtung als Riemenscheibendämpfer, Decoupler oder Riemenspanner beziehungsweise als Zweimassenschwungrad während des Betriebs der Brennkraftmaschine 2 eingesetzt.

Im Stillstand der Brennkraftmaschine 2 wird zum Start dieser bei hohen Summenmomenten die Elektromaschine 3 in einer Vorkonditionierungsphase entgegen ihrer Laufrichtung während des Betriebs der Brennkraftmaschine 2 im Generator-, Boost-, Rekuperationsbetrieb oder eines gewöhnlichen Starts verdreht, so dass die Federeinrichtung 5 komprimiert wird. Das hierbei anliegende Federmoment wird durch die Kurbelwelle 7 gegengehalten, wobei Kompressionsmomente des oder - bei höherer Zylinderanzahl - der aktuell mittels der Ventile der Brennkraftmaschine 2 abgedichteten Zylinder wirksam sind und der oder die betroffenen Zylinderinhalte komprimiert werden, wodurch Kompressionsarbeit in den Zylindern und potentielle Energie in der Federeinrichtung 5 gespeichert wird. Bei einer Drehrichtungsumkehr der Elektromaschine 3 wird die an diese angelegte Leistung durch die frei werdenden Expansionskräfte des oder der Zylinder und die Entspannungskräfte der Federeinrichtung 5 unterstützt, so dass diese mittels eines gesteigerten Drehimpulses das Summenmoment des bei größeren Drehwinkeln der Kurbelwelle 7 verdichteten Zylinders überwindet und der in diesem eingespritzte Kraftstoff zur Zündung gebracht wird und die Brennkraftmaschine 2 damit gestartet wird.

Figur 2 zeigt bezogen auf die Vorrichtung 1 der Figur 1 das Diagramm 8 des Summenmoments M der Brennkraftmaschine 2 gegen den Drehwinkel KW der Kurbelwelle 7 anhand eines Vierzylindermotors. Über zwei, einem Drehwinkel von 720° entsprechenden Umdrehungen der Kurbelwelle 7 wird gleich verteilt jeder der Zylinder nacheinander komprimiert und entspannt, so dass sich über den Drehwinkel der Summenmomentverlauf 9 mit vier Summenmomentmaxima Mₘₐₓ ergibt. Der Summenmomentverlauf 9 wird dabei aus den Kompressions- und Expansionsmomenten der Zylinder und die Schleppmomente der Kolben in den Zylindern, der Lagerreibung der Pleuel und der Kurbel- und Nebenwellen und dergleichen gebildet.

Wird die Brennkraftmaschine 2 stillgelegt, pendelt sich bei die Kurbelwelle 7 um den Nullpunkt des Summenmomentverlaufs 9 zwischen zwei Summenmomentmaxima M_{max,1}, M_{max,2} im Drehwinkelbereich ΔKW ein, der von dem Nullpunkt aufgrund der anliegenden Schleppmomente verschieden sein kann und gegebenenfalls von einem Drehwinkelsensor der Kurbelwelle 7 exakt erfasst wird.

Wird aufgrund einer Auswertung eines beispielsweise aus der Außentemperatur ermittelten Erwartungswerts ein Summenmoment M des während eines Starts zu überwindenden Summenmomentmaximums M_{max,2} größer als ein von der Elektromaschine 3 aufbringbares Drehmoment ermittelt, wird die Elektromaschine 3 gegebenenfalls unter Verwendung der exakten Position der Kurbelwelle entgegen ihrer ursprünglichen Laufrichtung bestromt, so dass die Kurbelwelle 7 entgegen ihrer ursprünglichen Laufrichtung in Richtung des Pfeils 10 verdreht wird. Anhand des Erwartungswerts, der Drehwinkelinformation der Kurbelwelle, des an der Elektromaschine 3 anliegenden Moments und/oder anderer geeigneter Größen wird die Kurbelwelle 7 bis höchstens zum oberen Totpunkt des Zylinders mit dem Summenmomentmaximum M_{max,1} verdreht, so dass bei einer Drehrichtungsumkehr der Elektromaschine 3 durch das Expansionsmoment und die vorgespannte Federeinrichtung 5 frei wird und das bei Außentemperaturen von beispielsweise kleiner 0° erhöhte Summenmomentmaximum M_{max,2} überwunden und die Brennkraftmaschine 2 gestartet wird.

### Bezugszeichenliste

- 1: Vorrichtung
- 2: Brennkraftmaschine
- 3: Elektromaschine
- 4: Schwingungsdämpfungseinrichtung
- 5: Federeinrichtung
- 6: Reibeinrichtung
- 7: Kurbelwelle
- 8: Diagramm
- 9: Summenmomentenverlauf
- 10: Pfeil
- ΔKW: Drehwinkelbereich
- KW: Drehwinkel Kurbelwelle
- M: Summenmoment
- Mₘₐₓ: Summenmomentmaximum
- M_{max,1}: Summenmomentmaximum
- M_{max,2}: Summenmomentmaximum

## Patentansprüche

1. Verfahren zum Start einer Brennkraftmaschine (2) mit über einen Drehwinkel (KW) deren Kurbelwelle (7) wellenförmig verlaufendem Summenmoment (M) mittels einer mit der Kurbelwelle (7) drehgekoppelten Elektromaschine (3) und zwischen Kurbelwelle (7) und Elektromaschine (3) wirksamen Drehelastizität, wobei zu Beginn eines Startvorgangs die zwischen zwei Summenmomentmaxima (M_{max,1}, M_{max,2}) stehende Kurbelwelle (7) mittels der Elektromaschine (3) entgegen einer Drehrichtung der Kurbelwelle (7) im Betrieb der Brennkraftmaschine (2) um einen vorgegebenen Drehwinkel mit kleinerem Summenmoment (M) als einem maximalen Summenmoment (M_{max,1}) verdreht und die Drehelastizität vorgespannt wird, wobei Kompressionsarbeit in Zylindern der Brennkraftschine (2) gespeichert wird und anschließend unter Drehrichtungsumkehr mittels der Elektromaschine (3) zur Überwindung des maximalen Summenmoments (Mₘₐₓ) durch die frei werdenden Expansionskräfte der Zylinder und die Entspannungskräfte der Drehelastizität beschleunigt wird, wobei die Drehelastizität als Federeinrichtung (5) ausgeführt ist, **dadurch gekennzeichnet, dass** die Federeinrichtung einen Freiwinkel beispielsweise bis zu ± 30° aufweist, so dass nach Abbau der die Beschleunigung der Elektromaschine fördernden Vorspannung der Federeinrichtung (5) ein kraftfreier Bereich der Federeinrichtung (5) wirksam ist und das Summenmomentmaximum im Wesentlichen erreicht ist, bevor die Federeinrichtung in die entgegengesetzte Richtung wieder ein Federmoment aufbaut.

2. Verfahren nach Anspruch 1, **dadurch gekennzeichnet, dass** die Kurbelwelle (7) und die Drehelastizität mit einem vorgegebenen Drehmoment der Elektromaschine (3) belastet werden.

3. Verfahren nach Anspruch 1 oder 2, **dadurch gekennzeichnet, dass** die Kurbelwelle (7) um einen vorgegebenen Drehwinkel abhängig von einer zwischen Elektromaschine (3) und Kurbelwelle (7) eingestellten Übersetzung und einer Anzahl der Zylinder der Brennkraftmaschine (2) eingestellt wird.

4. Verfahren nach einem der Ansprüche 1 bis 3, **dadurch gekennzeichnet, dass** ein zwischen Elektromaschine (3) und Kurbelwelle (7) gegebenenfalls vorhandenes schaltbares Getriebe von der Elektromaschine (3) zur Kurbelwelle (7) ins Langsame übersetzend geschaltet wird.

5. Verfahren nach einem der Ansprüche 1 bis 4, **dadurch gekennzeichnet, dass** das Verfahren bei Überschreiten eines Erwartungswerts für ein maximales Summenmoment (Mₘₐₓ) der Brennkraftmaschine (2) durchgeführt wird.

6. Verfahren nach Anspruch 5, **dadurch gekennzeichnet, dass** der Erwartungswert abhängig von der Außentemperatur ermittelt wird.

7. Vorrichtung einer Brennkraftmaschine (2) mit einer Kurbelwelle (7), einer Elektromaschine (3) und einer zwischen Kurbelwelle (7) und Elektromaschine (3) vorhandenen Federeinrichtung (5) einer Schwingungsdämpfungseinrichtung (4) (1) zur Durchführung des Verfahrens nach einem der Ansprüche 1 bis 6, wobei ein Steuergerät zur Speicherung von Programmroutinen zur Durchführung des Verfahrens vorgesehen ist.

8. Vorrichtung (1) nach Anspruch 7, **dadurch gekennzeichnet, dass** die Elektromaschine (3) in einem Riementrieb aufgenommen ist und die Federeinrichtung (5) einer Riemendämpfungseinrichtung ist.

9. Vorrichtung (1) nach Anspruch 8, **dadurch gekennzeichnet, dass** zwischen der Elektromaschine (3) und der Kurbelwelle (7) ein schaltbares Getriebe angeordnet ist.

10. Vorrichtung (1) nach Anspruch 7, **dadurch gekennzeichnet, dass** die Elektromaschine (3) parallel zur Brennkraftmaschine (2) in einem hybridischen Antriebsstrang angeordnet ist und die Federeinrichtung (5) Teil eines Drehschwingungsdämpfers ist.

## Claims

1. A method for starting an internal combustion engine (2) having a summed torque (M) extending in a wave form over a rotational angle (KW) of its crankshaft (7) by means of an electric machine (3) that is rotationally coupled to the crankshaft (7) and effective torsional elasticity between the crankshaft (7) and electric machine (3), wherein at the start of the starting process the crankshaft (7) positioned between the two summed torque maximums (Mm_{ax,1}, M_{max,2}) is rotated by means of the electric machine (3) in the opposite direction to a direction of rotation of the crankshaft (7) during operation of the internal combustion machine (2) by a predefined rotational angle with a smaller summed torque (M) as a maximum summed torque (M_{max,1}) and the torsional elasticity is prestressed, wherein compression work is stored in the cylinders of the internal combustion engine (2) and is then accelerated by reversing the direction of rotation by means of the electric machine (3) to overcome the maximum summed torque (Mₘₐₓ) by the expansion forces released by the cylinders and the relaxation forces of the torsional elasticity, wherein the torsional elasticity is designed as a spring device (5), **characterised in that** the spring device has a clearance angle of up to ± 30°, for example, so that a force-free area of the spring device (5) is effective after the prestressing of the spring device (5) promoting the acceleration of the electric machine has been removed and the summed torque maximum is substantially reached, before the spring device builds up a spring torque again in the opposite direction.

2. The method according to claim 1, **characterised in that** the crankshaft (7) and the torsional elasticity are loaded with a predetermined torque of the electric machine (3).

3. The method according to claim 1 or 2, **characterised in that** the crankshaft (7) is set by a predetermined rotational angle depending on a gear ratio set between the electric machine (3) and the crankshaft (7) and a number of cylinders of the internal combustion engine (2).

4. The method according to any one of claims 1 to 3, **characterised in that** a switchable transmission which may be present between the electric machine (3) and the crankshaft (7) is switched to a slow speed from the electric machine (3) to the crankshaft (7).

5. The method according to any one of claims 1 to 4, **characterised in that** the method is carried out when an expected value for a maximum summed torque (Mₘₐₓ) of the internal combustion engine (2) is exceeded.

6. The method according to claim 5, **characterised in that** the expected value is determined as a function of the outside temperature.

7. A device of an internal combustion engine (2) having a crankshaft (7), an electric machine (3) and a spring device (5) of a vibration damping device (4) (1) present between the crankshaft (7) and the electric machine (3) for performing the method according to any one of claims 1 to 6, wherein a control device is provided for storing program routines for carrying out the method.

8. The device (1) according to claim 7, **characterised in that** the electric machine (3) is accommodated in a belt drive and the spring device (5) in a belt damping device.

9. The device (1) according to claim 8, **characterised in that** a switchable transmission is arranged between the electric machine (3) and the crankshaft (7).

10. The device (1) according to claim 7, **characterised in that** the electric machine (3) is arranged parallel to the internal combustion engine (2) in a hybrid drive train and the spring device (5) is part of a torsional vibration damper.

## Revendications

1. Procédé pour le démarrage d'un moteur à combustion interne (2) au moyen d'un moment cumulé (M) s'étendant de façon ondulée sur un angle de rotation (KW) de son vilebrequin (7), à l'aide d'une machine électrique (3) couplée en rotation avec le vilebrequin (7) et d'une élasticité en torsion agissant entre le vilebrequin (7) et la machine électrique (3), au début d'un processus de démarrage, le vilebrequin (7) se trouvant entre deux maxima du moment cumulé (M_{max,1}, M_{max,2}) étant tourné à l'aide de la machine électrique (3) à l'opposé d'un sens de rotation du vilebrequin (7) lors du fonctionnement du moteur à combustion interne (2), de l'ordre d'un angle de rotation prédéfini au moyen d'un moment cumulé (M) inférieur à un moment cumulé maximal (M_{max,1}) et l'élasticité en torsion est précontrainte, le travail de compression étant stocké dans les cylindres du moteur à combustion interne (2) puis, en inversant le sens de rotation au moyen de la machine électrique (3) pour surmonter le moment cumulé maximal (Mₘₐₓ), étant accéléré par les forces d'extension libérées du cylindre et les forces de détente de l'élasticité en torsion, l'élasticité en torsion étant conçue comme un dispositif à ressort (5), **caractérisé en ce que** le dispositif à ressort présente un angle de dégagement allant jusqu'à ± 30°, par exemple, de sorte qu'après la réduction de la précontrainte, produisant l'accélération de la machine électrique, du dispositif à ressort (5), une zone sans force du dispositif à ressort (5) soit efficace et le moment cumulé maximal soit essentiellement atteint avant que le dispositif à ressort ne produise de nouveau un moment de ressort dans le sens opposé.

2. Procédé selon la revendication 1, **caractérisé en ce que** le vilebrequin (7) et l'élasticité en torsion sont chargés avec un moment de rotation prédéterminé de la machine électrique (3).

3. Procédé selon la revendication 1 ou 2, **caractérisé en ce que** le vilebrequin (7) est réglé selon un angle de rotation prédéterminé en fonction d'un rapport de transmission réglé entre la machine électrique (3) et le vilebrequin (7) et d'un nombre de cylindres du moteur à combustion interne (2).

4. Procédé selon l'une quelconque des revendications 1 à 3, **caractérisé en ce qu'**une transmission commutable qui peut être présente entre la machine électrique (3) et le vilebrequin (7) est commutée à vitesse lente de la machine électrique (3) vers le vilebrequin (7).

5. Procédé selon l'une quelconque des revendications 1 à 4, **caractérisé en ce que** le procédé est exécuté lors du dépassement d'une valeur attendue pour un moment cumulé maximal (Mₘₐₓ) du moteur à combustion interne (2).

6. Procédé selon la revendication 5, **caractérisé en ce que** la valeur attendue est déterminée en fonction de la température extérieure.

7. Dispositif d'un moteur à combustion interne (2) comprenant un vilebrequin (7), une machine électrique (3) et un dispositif à ressort (5) d'un dispositif d'amortissement des vibrations (4) (1) présent entre le vilebrequin (7) et la machine électrique (3) pour exécuter le procédé selon l'une quelconque des revendications 1 à 6, un appareil de commande étant prévu pour stocker des procédures de programme pour exécuter le procédé.

8. Dispositif (1) selon la revendication 7, **caractérisé en ce que** la machine électrique (3) est logée dans un entraînement par courroie et le dispositif à ressort (5) est un dispositif d'amortissement à courroie.

9. Dispositif (1) selon la revendication 8, **caractérisé en ce qu'**un engrenage commutable est disposé entre la machine électrique (3) et le vilebrequin (7).

10. Dispositif (1) selon la revendication 7, **caractérisé en ce que** la machine électrique (3) est disposée parallèlement au moteur à combustion interne (2) dans une chaîne cinématique hybride et le dispositif à ressort (5) fait partie d'un amortisseur de vibrations de rotation.
